# EUROPEAN PATENT APPLICATION

(11) **EP 4 614 255 A1**
(43) Date of publication of application: **10.09.2025**
(21) Application number: 23884858.4
(22) Date of filing: 30.10.2023
(51) Int. Cl.: G05B 19/418, G06Q 10/06

(54) **AUTOMATION PROCESS MANAGEMENT METHOD AND APPARATUS, ELECTRONIC DEVICE, AND STORAGE MEDIUM**

(30) Priority: 04.11.2022 CN 202211376143
(71) Applicant: Shenzhen Megarobo Technologies Co., Ltd., Shenzhen, Guangdong 518107 (CN)
(72) Inventor: SUN, Fei, Shenzhen, Guangdong 518107 (CN)
(74) Representative: Hofmann, Matthias
(86) International application number: PCT/CN2023/127813
(87) International publication number: WO 2024/093928

(57) **Abstract**

Provided are an automation process management method (1000) and apparatus (400), an electronic device (500), and a storage medium. The management method (1000) comprises: acquiring time constraint information and node information between two adjacent nodes in an automation process, wherein the time constraint information is used for constraining execution time of a transfer operation of a target between two adjacent nodes (S1200); determining the total time of the transfer operation on the basis of the node information of the two adjacent nodes (S1400); and on the basis of the total time, verifying whether the time constraint information is reasonable (S1600). Therefore, the effectiveness of the target in the automation process can be ensured, thereby ensuring the automation process to be performed accurately and smoothly.

## Description

This application claims the priority to Chinese Patent Application No.202211376143.3, titled "AUTOMATION PROCESS MANAGEMENT METHOD AND APPARATUS, ELECTRONIC DEVICE, AND STORAGE MEDIUM", filed on November 04, 2022 with the China National Intellectual Property Administration, which is incorporated herein by reference in its entirety.

### FIELD

The present disclosure relates to the field of automation, and in particular to a management method for an automated process, a management apparatus for an automated process, an electronic device, and a storage medium.

### BACKGROUND

At present, many technological fields are undergoing continuous automation transformation, to liberate manpower and improve efficiency. Automation systems are widely used in automated manufacturing, automated detection, automated testing/experiment, or the like. In an automation system, the entire automated process is divided into multiple operations performed by individual devices. The operations include not only primary operations where execution devices handle the target, but also transfer operations where transfer devices transfer the target between different execution devices.

Taking a laboratory automation system as an example, execution devices from different manufacturers, such as an incubator, a centrifuge, a liquid workstation, a lid remover or a microplate reader, may be integrated to perform different experimental operations on corresponding samples. In addition, transfer operations via transfer devices such as robotic arms for transferring samples between different execution devices are generally needed to ensure the smooth execution of the experimental process. During the automated process, it takes a certain execution duration for each transfer device to complete each transfer operation. However, timeout may occur due to device fault or communication issues. In addition, there are special requirements for exposure time of some samples. For example, the time for transferring bacterial suspension carried by a well plate exceeding a certain time limit may lead to deterioration of the bacterial suspension.

In the prior art, the automation system can schedule operations in the automated process based on time. For example, a transfer device in the automated process may take a certain amount of time to perform a corresponding transfer operation. Based on this, the automation system may schedule execution operations of subsequent devices following the transfer device in the automated process, making the subsequent devices perform corresponding operations as scheduled. However, the problem of excessively long exposure time of the sample due to the excessively long time for transferring the sample is generally ignored, leading to deterioration of the sample. The deterioration of the sample is very likely to disrupt the normal proceeding of the automated process, resulting in wrong results.

### SUMMARY

In view of the above problem, the present disclosure is provided. A management method for an automated process is provided according to an aspect of the present disclosure. The management method for the automated process includes: obtaining temporal constraint information between two adjacent nodes in the automated process and node information of the two adjacent nodes, where the temporal constraint information is for constraining an execution duration of a transfer operation to transfer a target between the two adjacent nodes; determining a total duration of the transfer operation, based on the node information of the two adjacent nodes; and verifying whether the temporal constraint information is reasonable based on the total duration.

In an embodiment, the node information includes a note type, the node type includes a device node, and the node information of the device node further includes: duration information of operations supported by a device corresponding to the device node; and the determining a total duration of the transfer operation, based on the node information of the two adjacent nodes includes: determining the total duration based on the node type and the duration information of the operations supported by the device corresponding to the device node.

In an embodiment, the node type further includes a start node; and the determining the total duration based on the node type and the duration information of the operations supported by the device corresponding to the device node includes: in a case that an upstream node of the two adjacent nodes is a start node, determining a first execution duration of a pre-operation corresponding to a downstream node of the two adjacent nodes, where the pre-operation is an operation completed before a device corresponding to the downstream node performs its own operation; and determining the first execution duration as the total duration.

In an embodiment, the determining the total duration based on the node type and the duration information of the operations supported by the device corresponding to the device node includes: in a case that the two adjacent nodes are both device nodes, determining a second execution duration of a post-operation corresponding to an upstream node of the two adjacent nodes, and determining a third execution duration of a pre-operation corresponding to a downstream node of the two adjacent nodes, where the post-operation is an operation completed after the device corresponding to the upstream node performs its own operation, and the pre-operation is an operation completed before the device corresponding to the downstream node performs its own operation; and adding up the second execution duration and the third execution duration to obtain the total duration.

In an embodiment, the node type further includes an end node; and the determining the total duration based on the node type and the duration information of the operations supported by the device corresponding to the device node includes: in a case that a downstream node of the two adjacent nodes is an end node, determining a fourth execution duration of a post-operation corresponding to an upstream node of the two adjacent nodes, where the post-operation is an operation completed after a device corresponding to the upstream node performs its own operation; and determining the fourth execution duration as the total duration.

In an embodiment, the obtaining temporal constraint information between two adjacent nodes in the automated process and node information of the two adjacent nodes includes: obtaining node information of each start node or each device node in the automated process, traversing each downstream node directly connected to each start node or each device node, and obtaining node information of the downstream node for cases where the downstream node is a device node or an end node.

In an embodiment, the device node in the two adjacent nodes corresponds to a plurality of targets, and the temporal constraint information is configured to separately constrain an execution duration of a transfer operation to transfer each of the plurality of targets between the two adjacent nodes, where the determining a total duration of the transfer operation includes: determining a total duration of the transfer operation for each of the plurality of targets; and the verifying whether the temporal constraint information is reasonable includes: separately verifying whether the temporal constraint information for each target is reasonable based on the total duration of the transfer operation for respective target.

In an embodiment, the temporal constraint information includes expiration time information, and the verifying whether the temporal constraint information is reasonable includes: determining that the temporal constraint information is reasonable in a case that an expiration time indicated by the expiration time information is greater than or equal to the total duration; and determining that the temporal constraint information is erroneous in a case that the expiration time indicated by the expiration time information is less than the total duration.

In an embodiment, before the obtaining temporal constraint information between two adjacent nodes in the automated process, the method further includes: displaying a graphical user interface, where the graphical user interface includes an operable control; and receiving the temporal constraint information from a user in response to a first operation performed by the user with the operable control.

In an embodiment, the temporal constraint information includes expiration time information, and after the verifying whether the temporal constraint information is reasonable, the method further includes: after determining that the temporal constraint information is reasonable, running the automated process in response to a second operation performed by the user; in the running of the automated process, determining whether an execution duration of the transfer operation to transfer the target between the two adjacent nodes is greater than an expiration time indicated by the expiration time information; and marking the target with an expired state, in a case that the execution duration of the transfer operation to transfer the target between the two adjacent nodes is greater than the expiration time indicated by the expiration time information.

In an embodiment, after the verifying whether the temporal constraint information is reasonable, the method further includes: determining an execution sequence of atomic operations between the two adjacent nodes based on a connection relationship of the two adjacent nodes in the automated process; re-determining the total duration, based at least on the execution sequence and a preset execution duration of each of the atomic operations; and re-verifying whether the temporal constraint information is reasonable based on the re-determined total duration.

According to a second aspect of the present disclosure, a management apparatus for an automated process is provided, and the management apparatus for the automated process includes: an obtaining module, configured to obtain temporal constraint information between two adjacent nodes in the automated process and obtain node information of the two adjacent nodes, where the temporal constraint information is for constraining an execution duration of a transfer operation to transfer a target between the two adjacent nodes; a determination module, configured to determine a total duration of the transfer operation, based on the node information of the two adjacent nodes; and a verification module, configured to verify whether the temporal constraint information is reasonable based on the total duration.

According to a third aspect of the present disclosure, an electronic device is provided, and the electronic device includes a processor and a memory, where the memory stores computer program instructions, and the computer program instructions, when executed by the processor, implement the management method for the automated process described above.

According to a fourth aspect of the present disclosure, a storage medium is provided, where the storage medium stores program instructions, and the program instructions, when executed, implement the management method for the automated process described above.

In the technical solution described above, the total duration of the transfer operation between two nodes performed on the target is determined based on the node information of two adjacent nodes in the automated process, and further the temporal constraint information configured in advance for constraining the execution duration of the transfer operation is verified based on the total duration. This solution can ensure the effectiveness of the target in the automated process, thereby ensuring the automated process to be performed accurately and smoothly.

The above description is merely an overview of the technical solutions according to the present disclosure. To enable a clearer understanding of the technical solutions according to the present disclosure, implement the technical solutions based on the content of the specification, and make the above and other objectives, features, and advantages of the present disclosure more apparent and comprehensible, specific embodiments of the present disclosure are explicitly described below.

### BRIEF DESCRIPTION OF THE DRAWINGS

Above and other objects, features, and advantages of the present disclosure will become more apparent with reference to a more detailed description of the embodiments of the present disclosure made in conjunction with the drawings. The drawings are intended to provide further understanding of the embodiments of the present disclosure, and constitute a part of the specification. The drawings are intended to describe the present disclosure in conjunction with the embodiments of the present disclosure, and do not limit the present disclosure. In the drawings, same reference numerals generally represent same parts or steps.
FIG. 1 shows a schematic flowchart of a management method for an automated process according to an embodiment of the present disclosure;
FIG. 2 shows a schematic diagram illustrating a part of an automated process according to an embodiment of the present disclosure;
FIG. 3a shows a schematic diagram illustrating a first part of a management method for an automated process according to another embodiment of the present disclosure;
FIG. 3b shows a schematic diagram illustrating a second part of a management method for an automated process according to another embodiment of the present disclosure;
FIG. 3c shows a schematic diagram illustrating a third part of a management method for an automated process according to another embodiment of the present disclosure;
FIG. 4 shows a schematic block diagram of a management apparatus for an automated process according to an embodiment of the present disclosure; and
FIG. 5 shows a schematic block diagram of an electronic device according to an embodiment of the present disclosure.

### DETAILED DESCRIPTION

Exemplary embodiments of the present disclosure are described in detail with reference to the drawings to make purposes, technical solutions, and advantages of the present disclosure more apparent. Apparently, the described embodiments are only a part of the embodiments instead of all embodiments of the present disclosure. It should be understood that, the present disclosure is not limited by the exemplary embodiments described herein. Based on the embodiments of the present disclosure described herein, all other embodiments obtained by those skilled in the art without creative efforts are deemed to fall into the protection scope of the present disclosure.

In order to at least partially solve the technical problems described above, a management method for an automated process is provided according to a first aspect of the present disclosure. The management method according to the embodiment of the present disclosure may be applied to automated process for various suitable targets in various fields. For convenience of illustration, an automated process of an automation system in the field of biochemistry is described in the following as an example.

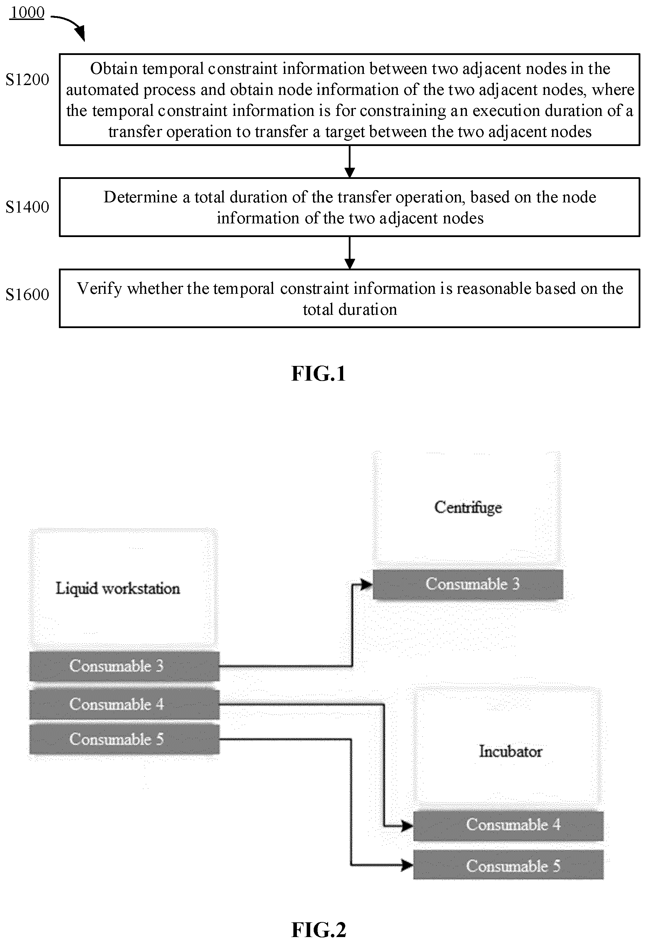

FIG. 1 shows a schematic flowchart of a management method 1000 for an automated process according to an embodiment of the present disclosure. As shown in FIG. 1, the management method 1000 may include the following steps S1200, S1400, and S1600.

In step S1200, temporal constraint information between two adjacent nodes in the automated process and node information of the two adjacent nodes are obtained, where the temporal constraint information is for constraining an execution duration of a transfer operation to transfer a target between the two adjacent nodes.

The automated process may be pre-designed based on an actual testing/experimental requirement. By way of example and not limitation, the step S1200 may be performed after completing the design of the automated process, in response to any triggering operation from a user. The triggering operation may be any suitable operation, for example, it may be the user clicking on the "save process" control after designing the automated process. According to the embodiment of the present disclosure, the automated process may include a series of related operations required to perform a testing/experiment on the target. The automated process may involve various process information, such as execution subjects and execution objects of respective operations, execution contents, execution conditions, execution duration and execution logics for executing the operations, or the like. The target may refer to an operable object in the automated process, which may be any suitable target. By way of example and not limitation, the target may be laboratory consumables such as test tubes, glass sheets, well plates, or the like for carrying samples such as bacterial suspension. Definitely, for automated processes in other fields, the target may be other forms of operable objects.

The automated process may be formed by multiple nodes connected in a certain connection order. The node information of each node may include any information related to various operations to be completed at the node, such as information related to an operation type, an operation time, an operation instruction, a related execution subject of the operation, and/or the sub-operations involved in the operation, or the like. The operation to be completed at the node may be any suitable operation. These operations are, for example, corresponding processing operations performed by the execution device on the target, such as centrifugation performed by the centrifuge on the target. These operations are, for another example, transfer operations performed by the transfer device to transfer the target between different devices. The node information corresponding to the transfer operation may include information of the position of the target, such as information of a starting position of the target, an ending position of the target, and a fault position of the target in a case that a fault occurs in the process. In addition, some nodes may be adopted for process control, such as for executing judgments and loops in a process. Further, the node information between two adjacent nodes in step S1200 may be node information configured at the time of establishing the automated process, or may be node information configured in advance for the nodes before establishing the automated process.

By way of example and not limitation, the node information may include a node name, a node type, an estimated time consumption of a node operation, or the like. Specifically, the node name is an identifier for distinguishing from other nodes, it may be named by a user, or may directly adopt the name of a device corresponding to a primary operation of the node, such as a centrifuge. The node type is classified according to a function corresponding to the node, such as a device node, a start node, an end node, a flow control node, or the like. The estimated time consumption of the node operation may represent the estimated time consumption of each operation performed on the target by the node.

The two adjacent nodes may be any two nodes in the automated process that are directly connected in the order of execution, and temporal constraint information can be obtained between the two nodes. The two adjacent nodes, for example, may include an upstream node A and a downstream node B. It is to be understood that the upstream node A is closer to the start end of the automated process than the downstream node B. The execution of the primary operation corresponding to the downstream node B is started after the execution of the primary operation corresponding to the upstream node is completed, namely there is a logical relationship of sequential execution between the two operations. It should be noted that operations related to each node may include a primary operation, a pre-operation, and a post-operation.

As described above, during actual practice of the automated process, due to device fault, communication issues or other factors, the actual execution duration of the operations may often exceed the theoretical execution duration of the operations. And for some specific targets, for example, experimental consumables such as a bacterial suspension, exceeding a certain time length during processing or transfer in a certain device may lead to expiration and loss of efficacy. Considering these two factors, in order to ensure the smooth progress of the automated process and the efficacy of the target, it is advisable to allow for reasonable tolerance for the execution duration of some related operations. It is advisable to set reasonable temporal constraints in the temporal constraint information to constrain the actual execution duration of the related operations. This approach not only allows the process to continue normally even if the theoretical execution duration is exceeded but also allows marking the target as expired or to be discarded if the constrained safe period or effective period is exceeded; and the target may further be transferred to a discard location after it is marked as to be discarded.

According to the embodiment of the present disclosure, the temporal constraint information may be configured between two adjacent nodes, based on the actual temporal constraint requirement. The temporal constraint information is for constraining the execution duration of the transfer operation to transfer the target between two adjacent nodes. As described above, the transfer operation may be an operation performed by the transfer device on the target. For the condition that any one of the upstream node A and the downstream node B involves the transfer operation, the temporal constraint information may be configured between the two nodes when designing the automated process. The constraint indicated by the temporal constraint information between two adjacent nodes may be configured depending on the constraint requirement of the process. By way of example and not limitation, the temporal constraint information may include expiration time information and maximum waiting time information. The expiration time information may be a preset maximum safe period of the transfer operation performed on the target, and a corresponding expiration processing is performed on the target, for example, marking the target as expired, when the preset maximum safe period is exceeded. The maximum waiting time information may be a preset maximum effective period of the transfer operation performed on the target, and a corresponding invalidating and/or discarding operation is performed on the target, for example, marking the target as invalidated and discarding the target, when the preset maximum effective period is exceeded. Definitely, the temporal constraint information may also be other suitable information for constraining the time period of the transfer operation performed on the target. In step S1200, the corresponding time length constrained by the temporal constraint information may be obtained by, for example, reading the temporal constraint information between two adjacent nodes.

In step S1400, a total duration of the transfer operation is determined, based on the node information of the two adjacent nodes.

As described above, the node information of the two adjacent nodes may include any information related to various operations performed at each node. Exemplarily, the node information may include an operation list of various operations corresponding to the node and a predicted execution duration for each operation. For example, in a case that a node is involved in the transfer operation on the target, the node information may include a list of sub-operations of the transfer operation performed at the node and predicted execution durations of respective sub-operations. In this step, the total duration of the transfer operation to transfer the target between the two nodes can be determined based on the predicted execution durations of the sub-operations of the transfer operation performed at the two nodes respectively. That is, the estimated time information of the transfer operation performed between the two adjacent nodes may be determined from the node information of each of the two adjacent nodes, and the total duration may be determined based on the estimated time information. The total duration may be the predicted total execution duration of all sub-operations of the transfer operation between two adjacent nodes. This step may be implemented in any suitable manner. For example, firstly sub-operations involved in the transfer operation between the nodes may be selected from the node information of each node, and then the total duration of the transfer operation performed between two nodes may be determined based on the predicted execution duration of each selected sub-operation with a suitable statistical method.

In step S1600, whether the temporal constraint information is reasonable is verified based on the total duration.

Part of the temporal constraint information between two adjacent nodes configured in the design stage of automated process may be unreasonable due to various reasons such as improper estimation of time by users. In this step, each node in the entire automated process may be traversed to verify the rationality of all temporal constraint information between every two adjacent nodes.

As described above, the total duration determined in step S1400 may be a predicted execution duration or a theoretical execution duration of all sub-operations of the transfer operation performed between two adjacent nodes, which can be calculated by any suitable method. The temporal constraint information between the two nodes acquired in step S1200 is used to constrain the actual execution duration of the transfer operation. And the purpose of setting the temporal constraint information between the two nodes is to allow reasonable tolerance for the execution duration of for example the transfer operation, that is, to allow the actual execution duration of the transfer operation to appropriately exceed the theoretical execution duration while ensuring the safety or efficacy of the target. In other words, the actual execution duration constrained by the temporal constraint information is determined based on its theoretical time, and there is a correlation between the actual execution duration and the theoretical time. Therefore, in step S1600, the total duration of the transfer operation determined in step S1400 may be used to verify whether the temporal constraint information between the two adjacent nodes is reasonable. Any suitable verification logic may be implemented to verify the reasonability of the temporal constraint information. For example, the verification may be performed by comparing the total duration with the constraint time length indicated by the temporal constraint information.

In the technical solution described above, the total duration of the transfer operation to transfer the target between two adjacent nodes in the automated process is determined based on the node information of the two adjacent nodes, and then the total duration is utilized to verify the temporal constraint information configured in advance for constraining the execution duration of the transfer operation. This solution can ensure the efficacy of the target in the automated process, thereby ensuring the automated process to be performed accurately and smoothly.

Exemplarily, before the obtaining temporal constraint information between two adjacent nodes in the automated process in step S1200, the method 1000 further includes steps S1110 and S1120.

In step S1110, a graphical user interface is displayed, where the graphical user interface includes an operable control. As described above, the temporal constraint information for two adjacent nodes may be configured during the design stage of the automated process. The two adjacent nodes may be an upstream node A and a downstream node B. By way of example and not limitation, a graphical user interface for configuring the temporal constraint information may be displayed in response to a user operation that selects the temporal constraint information of the upstream node. According to the embodiment of the present disclosure, the temporal constraint information between two nodes may have one or more types, and thus, one or more operable controls may also be included in the graphical user interface. Each operable control may be used to operatively configure one type of temporal constraint information. For example, the temporal constraint information between two nodes may include expiration time information and maximum waiting time information. A list of "temporal constraint information configurations between nodes" may be included in the graphical user interface. Two operable controls for configuring the temporal constraint information between the currently selected node and its adjacent downstream node may be included in the list. One of the operable controls may be used for configuring the "expiration time" of the transfer operation between the two nodes, and the other may be used for configuring the "maximum waiting time". The operable control may be any suitable control, such as an input control or a drop-down list selection control. Furthermore, in a case that the temporal constraint information for multiple targets are configured between the two adjacent nodes, the graphical user interface supports configuring the temporal constraint information of each target. Also in the above example, under the list of the "temporal constraint information configurations between nodes" in the graphical user interface, there may be rows of operable controls, which may be used separately to configure the temporal constraint information for constraining the transfer operation of each target.

In step S1120, the temporal constraint information is received from a user in response to a first operation performed by the user with the operable control. The first operation performed by the user with the operable control may be any suitable operation. The first operation may be, for example, the user inputting a desired time through an input control, or the user selecting a desired time through a drop-down list control. After the user inputs or selects the desired constraint time, the temporal constraint information inputted or selected by the user may be received and displayed on the graphical user interface. For example, the time "55" inputted by the user using the input control under the "expiration time" list in the graphical user interface may be received in step S1120, and the constraint time "55" may be displayed correspondingly on the interface. Thus, the constraint for the execution duration of an operation such as the transfer operation of transferring "Consumable 1" between the two nodes is configured. After the configuration is completed, the expiration time of the target may be obtained at the node in step S1200, and the expiration time of "55" seconds in the temporal constraint information may be verified based on the determined total duration in step S1600.

The solution of providing a visual human-computer interaction interface and operable controls for users to freely configure temporal constraint information facilitates users to configure the temporal constraint information more accurately, and the user experience is better.

Exemplarily, the node information includes a node type. As described above, node types are classified based on the corresponding functions of nodes, such as a device node, a start node, an end node, or a process control node. According to an embodiment of the present disclosure, the node type of the node may include a device node. The node information of the device node further includes: duration information of operations supported by a device corresponding to the device node. The device corresponding to the device node may include one or more devices. The device corresponding to the device node may include at least a primary execution device for performing primary operation on the target. Further, in a case that the transfer operation on the target is to be completed at the device node, the device corresponding to the device node may further include a transfer device that performs transfer operation on the target. The duration information of the operations supported by the device corresponding to the device node may include the predicted duration information of the primary operation performed on the target by the primary execution device, and may also include the predicted duration information of the transfer operation performed on the target by the transfer device . It is to be understood that whether or not the operation supported by the device corresponding to the device node belongs to the transfer operation is not determined based on the execution subject itself, but determined based on the purpose of the operation performed. The transfer device may also include a primary execution device and peripheral devices of the primary execution device, such as a lid opener and a lid closer. The transfer device may be another device such as a robotic arm.

In a specific example, for a device node where primary execution device is a centrifuge, the devices corresponding to the device node may include a centrifuge, a robotic arm, or the like. Therefore, the node information of the device node corresponding to the centrifuge may include a predicted duration of a centrifugation operation performed by the centrifuge, a predicted duration of a closing operation performed by the centrifuge or a lid closer of the centrifuge, and a predicted duration that the robotic arm moves the well plate carrying the bacterial suspension from the centrifuge to the next node. In a laboratory automated process, the primary execution device of device nodes may also include a liquid workstation, an incubator, a microplate reader, or the like. The transfer device may include the primary execution device itself as described above, or it may include only the robotic arm.

The determining a total duration of the transfer operation based on the node information of two adjacent nodes in step S1400 includes step S1410. In step S1410, the total duration is determined based on the node type and the duration information of the operations supported by the device corresponding to the device node. That is, at least one of the two adjacent nodes is a device node. The total duration may be determined based on the node types of the two nodes and the duration information of the operations supported by the device corresponding to each of the two nodes. In one example, in a case that two adjacent nodes are both device nodes, the duration information of the related operations supported by the device corresponding to the upstream node and the duration information of the related operations supported by the device corresponding to the downstream node may be counted separately, and then the total duration is determined. The related operation is, for example, the transfer operation for the target. In another example, in a case that only one device node is included in two adjacent nodes, the duration information of the related operations supported by the device corresponding to the device node may be counted based on the node type of the other node, and then the total duration is determined. The related operation is, for example, part of transfer operations performed on the target.

According to the above solution, the total duration may be determined based on node types of two adjacent nodes in the automated process and duration information of the operations supported by the device corresponding to the device node. The total duration determined by this solution is more accurate, making the validation of the temporal constraint information more accurate. Moreover, this solution is simple and the amount of calculation is small.

Exemplarily, the node type further includes a start node. The start node may refer to a node arranged at the beginning of the automated process. The determining the total duration based on the node type and the duration information of the operations supported by the device corresponding to the device node in step S1410 includes steps S1411 and S1412.

In step S1411, in a case that the upstream node of the two adjacent nodes is a start node, a first execution duration of the pre-operation corresponding to the downstream node of the two adjacent nodes is determined, where the pre-operation is an operation completed before the device corresponding to the downstream node performs its own operation.

According to the embodiment of the present disclosure, the transfer operation performed on the target may include a pre-operation involved by the device node, and the pre-operation is completed before the primary execution device performs the primary operation. Exemplarily, the pre-operation may be a transfer operation performed by a transfer device involved in the device node, an opening operation or a closing operation performed by a primary execution device or a peripheral device of the primary execution device such as a lid opener, or the like. The pre-operation may be understood as a preparing operation performed before the primary execution device performs the primary operation.

Among the two adjacent nodes, the upstream node may be a start node, and the downstream node may be a device node. For example, the upstream node may be a start node of the consumable 1, and the downstream node may be a device node representing a liquid workstation. The first execution duration of the pre-operation completed before the liquid handling operation is performed by the liquid workstation may then be determined based on the node information of the device node of the liquid workstation. The pre-operation may be a preparing work to facilitate the liquid workstation to perform the pipetting operation. The first execution duration of the pre-operation of a device node may be determined based on a pre-operation list in the node information of the device node. For example, the pre-operation may include a transfer operation where the robotic arm transfers the consumable 1 from its starting position to the liquid workstation. In this condition, a preset transfer operation duration for the robotic arm transferring the consumable 1 may be determined as the first execution duration. For example, in a case that the transfer time is 20 seconds, the first execution duration is equal to 20 seconds. It is to be understood that in a case that the pre-operation involved in the device node includes multiple operations, the first execution duration may be the sum of the predicted execution durations of the multiple operations. That is, the sum of the predicted execution durations of all pre-operations involved in the device node may be counted.

Further, in step S1412, the first execution duration may be determined as the total duration. For example, the predicted transfer duration of 20 seconds for the transfer of the consumable 1 from the starting position to the liquid workstation may be determined as the total duration of the transfer operation between nodes. Alternatively, the sum of the predicted execution durations of multiple pre-operations involved in the device node directly connected to the start node may be determined as the predicted total duration of the transfer operation. Subsequently, based on the total duration, whether the temporal constraint information between the start node and the device node is reasonable is verified. This solution is readily understood by those skilled in the art and will not be described herein.

According to the above solution, in a case that two adjacent nodes are the start node and the device node, the first execution duration of the pre-operation involved in the device node may be determined as the predicted total duration of the transfer operation performed between the two nodes. The described solution has simple execution logic, small amount of calculation, and improved accuracy in determining the total duration, and the efficiency and accuracy of the verification are improved.

Exemplarily, the determining the total duration based on the node type and the duration information of the operations supported by the device corresponding to the device node in step S1410 includes steps S1413 and S1414.

In step S1413, in a case that the two adjacent nodes are both device nodes, a second execution duration of a post-operation corresponding to the upstream node of the two adjacent nodes is determined, and a third execution duration of a pre-operation corresponding to the downstream node of the two adjacent nodes is determined, where the post-operation is an operation completed after the device corresponding to the upstream node performs its own operation, and the pre-operation is an operation completed before the device corresponding to the downstream node performs its own operation.

According to an embodiment of the present disclosure, the transfer operation performed on the target may include a pre-operation involved by the device node which is completed before the primary execution device performs the primary operation, or may include the post-operation completed after the primary execution device performs the primary operation. Both the adjacent nodes may be device nodes. Each device node may be involved in the pre-operation and the post-operation. The transfer operation between the two device nodes may be a post-operation performed on the target by a transfer device involved in an upstream device node of the two device nodes and a pre-operation performed on the target by a transfer device involved in a downstream device node. The node information of each device may include a pre-operation list and a post-operation list. The predicted execution duration of the post-operation performed on the target may be found from the post-operation list of the upstream device node as the second execution duration. And the predicted execution duration of the pre-operation performed on the target may be found from the pre-operation list of the downstream device node as the third execution duration. The pre-operation and post-operation involved in each device node may be various suitable operations configured based on actual requirements in the process design stage. The post-operation of the upstream device node may be regarded as a transfer operation of transferring the target from the primary execution device of the upstream device node to the primary execution device of the downstream device node. In a specific example, the upstream device node may be a device node where the primary execution device is a centrifuge, and the downstream device node may be a device node where the primary execution device is an incubator. The post-operation involved in the upstream device node of the centrifuge may be an operation completed after the centrifugation operation of the centrifuge. For example, the device node at the centrifuge may include an operation such as a rotation operation where the centrifuge rotates the consumable to the outlet, a centrifuge door opening operation, an operation where the robotic arm takes out the consumable, and a centrifuge door closing operation. Therefore, the sum of the predicted execution durations of all the post-operations described above may be determined as the second execution duration based on the pre-operation list and the post-operation list of the centrifuge device node. The pre-operation involved in the downstream device node where primary execution device is the incubator may include a plate placement operation of the incubator. The predicted execution duration of the plate placement operation may be determined as the third execution duration.

In step S1414, the second execution duration and the third execution duration are added up to obtain the total duration. The sum of the predicted execution duration of the post-operation involved in the upstream device node determined in the step described above and the predicted execution duration of the pre-operation involved in the downstream device node determined in the step described above are calculated, and the sum of the two is determined as the predicted total duration of the transfer operation to transfer the target between the two device nodes.

According to the above solution, in a case that two adjacent nodes are both device nodes, the sum of the predicted execution duration of the post-operation involved in the upstream device node and the predicted execution duration of the pre-operation involved in the downstream device node are determined as the predicted total duration of the transfer operation to transfer the target between two adjacent nodes, and then whether the temporal constraint information is reasonable is verified based on the total duration. This solution has simple execution logic, small amount of calculation, and improved accuracy in determining the total duration, and the efficiency and accuracy of the verification are improved.

Exemplarily, the node type further includes an end node. The end node may be an end location indicating the end of the process. It is to be understood that the end location is not a device node and thus the transfer operation to transfer the target is not included at the end node. The determining the total duration based on the node type and the duration information of the operations supported by the device corresponding to the device node in step S1410 includes steps S1415 and S1416. In step S1415, in a case that the downstream node of the two adjacent nodes is the end node, a fourth execution duration of the post-operation corresponding to the upstream node of the two adjacent nodes is determined, where the post-operation is an operation completed after the device corresponding to the upstream node performs its own operation. In step S1416, the determined fourth execution duration may be determined as the total duration.

In a case that the upstream node of the two adjacent nodes is a device node and the downstream node of the two adjacent nodes is an end node, the predicted execution duration of all post-operations involved in the upstream node may be determined based on the node information of the upstream node, which is determined as the fourth execution duration. The post-operation involved in the device node directly connected to the end node may also be any suitable transfer operation. The transfer operation may include, for example, a door opening operation or a door closing operation of the primary execution device, or a transfer operation where the robotic arm transfers the target from the primary execution device of the device node to the end location, or the like. The fourth execution duration may be the sum of the predicted execution durations of the post-operations described above. The fourth execution duration may be determined as the predicted total duration of the transfer operation between the device node and the end node, and whether the temporal constraint information is reasonable may be verified based on the total duration.

According to the above solution, in a case that the two adjacent nodes are the device node and the end node, the predicted execution duration of the post-operation involved in the device node may be determined as the predicted total duration of the transfer operation between the two nodes. Furthermore, whether the temporal constraint information is reasonable may be verified based on the total duration. The described solution has simple execution logic, small amount of calculation, and improved accuracy in determining the total duration, and the efficiency and accuracy of the verification are improved.

Exemplarily, the obtaining temporal constraint information between two adjacent nodes and obtaining node information of the two adjacent nodes in the automated process in step S1200 includes step S1210.

In step S1210, node information of each start node or each device node in the automated process is obtained, each downstream node directly connected to each start node or each device node is traversed, and node information of the downstream node is obtained for cases where the downstream node is a device node or an end node. According to an embodiment of the present disclosure, the entire automated process may be traversed to acquire the temporal constraint information between every two adjacent nodes and node information of every two adjacent nodes, based on the flowchart of the entire automated process. And the temporal constraint information between every two adjacent nodes is verified. Specifically, according to the execution direction of the automated process, firstly, node information of the device node directly connected to the start node for the consumable may be obtained and the temporal constraint information between the start node of the consumable and the device node directly connected to the start node for the consumable may be obtained, and whether each piece of temporal constraint information is reasonable may be verified. Secondly, the device node and a downstream node directly connected to the device node may be obtained, and in a case that the downstream node is a device node or an end node, node information of the two nodes and temporal constraint information between the two nodes may be obtained and verified. And then, in a case that the downstream node is a device node, the temporal constraint information between the device node and a device node directly connected to the device node or the temporal constraint information between the device node and an end node directly connected to the device node may be continuously obtained, and whether the temporal constraint information is reasonable is verified. Similarly, the temporal constraint information of the subsequent two adjacent nodes may be continuously obtained and whether the temporal constraint information is reasonable is verified. Finally, the node information of the last device node and the end node and the temporal constraint information between the last device node and the end node in the automated process may be obtained, and the temporal constraint information is verified. Definitely, it is also feasible to traverse the automated process to determine the node information of every two nodes and the temporal constraint information between the two nodes for the cases where the two adjacent nodes being respectively the start node and the device node, being respectively the device node and the device node, and being respectively the device node and end node. And then, the temporal constraint information between every two nodes is verified separately.

According to the solution described above, the entire automated process may be traversed, the node information of any two adjacent nodes and temporal constraint information between the two adjacent nodes in the process may be obtained, and whether the temporal constraint information between the two adjacent nodes is reasonable is verified. It is ensured that each piece of temporal constraint information is effectively verified, thus ensuring the smooth implementation of the automated process. Furthermore, the efficiency of the verification is improved.

Exemplarily, the device node of the two adjacent nodes corresponds to multiple targets. For example, any device node of two adjacent nodes contains the operation of the primary execution device performed on multiple consumables. The device node is also involved in transfer operation performed on multiple consumables. The temporal constraint information is for constraining the execution duration of the transfer operations between two adjacent nodes for each of the multiple targets.

The determining the total duration of the transfer operation in step S1400 includes: determining the total duration of the transfer operation performed on each of the multiple targets. The verifying whether the temporal constraint information is reasonable in step S1600 includes: separately verifying whether the temporal constraint information for each target is reasonable based on the total duration of the transfer operation for respective target. For example, in the foregoing example of steps S1110 and S1120, temporal constraint information input by the user using an operable control of the graphical user interface, such as an expiration time of "55" seconds for "consumable 1" and an expiration time of "50" seconds for "consumable 2", is received. And then, in step S1400, the total duration of preset execution duration of the transfer operation for "consumable 1", which is involved in the device node of the two nodes, is determined. In step S1600, the "55" seconds for constraining the expiration time of "consumable 1" is verified, and whether the expiration time "55" seconds is configured reasonably is determined. In step S1400, the total duration of preset execution duration of the transfer operation for "consumable 2", which is involved in the device node of the two nodes, is determined. In step S1600, the "50" seconds for constraining the expiration time of "consumable 2" is verified, and whether the expiration time "50" seconds is configured reasonably is determined.

FIG. 2 shows a schematic diagram illustrating a part of an automated process according to an embodiment of the present disclosure. Three device nodes in the automated process are shown in FIG. 2. Where, the upstream node "liquid workstation" and the downstream node "centrifuge" are adjacent device nodes. The two device nodes may include temporal constraint information for constraining the execution duration of the transfer operation to transfer "consumable 3". In step S1400, for the two device nodes, the sum of the predicted execution duration of the post-operation performed on the "consumable 3" involved by the device node "liquid workstation" and the predicted execution duration of the pre-operation performed on the "consumable 3" involved by the device node "centrifuge" may be determined as the total duration of the transfer operation to transfer the "consumable 3" between the two nodes. In step S1600, the temporal constraint information for constraining the execution duration of the transfer operation to transfer "consumable 3" may be verified based on the determined total duration.

In FIG. 2, the upstream node "liquid workstation" and the downstream node "incubator" are also adjacent device nodes. Between the two device nodes, temporal constraint information for constraining the execution duration for performing the transfer operation on "consumable 4" and temporal constraint information for constraining the execution duration for performing the transfer operation on "consumable 5" may be included. In step S1400, the sum of the estimated execution duration of the post-operation performed on the "consumable 4" involved by the device node of the "liquid workstation" and the estimated execution duration of the pre-operation performed on the "consumable 4" involved by the device node of the "centrifuge" may be determined as the total duration for performing the transfer operation on the "consumable 4" between the two nodes, and the total duration may be referred as "total transfer duration of the consumable 4". The sum of the estimated execution duration of the post-operation performed on the "consumable 5" involved by the device node of the "liquid workstation" and the estimated execution duration of the pre-operation performed on the "consumable 5" involved by the device node of the "centrifuge" may be determined as the total duration for performing the transfer operation on the "consumable 5" between the two nodes, and the total duration may be referred as "total transfer duration of the consumable 5". In step S1600, the temporal constraint information for constraining the execution duration for performing the transfer operation on the "consumable 4" may be verified based on the "total transfer duration of the consumable 4"; and the temporal constraint information for constraining the execution duration for performing the transfer operation on the "consumable 5" may be verified based on the "total transfer duration of the consumable 5".

According to the above solution, in a case that the temporal constraint information for multiple targets is included in the device node, the temporal constraint information for each target may be verified separately. In this way, the accuracy and effectiveness of the verification are ensured, thereby ensuring the accurate implementation of the automated process.

Exemplarily, the temporal constraint information includes expiration time information. As described above, the expiration time information may be adopted for indicating the expiration time of the target. The preset expiration time may be a sum of the execution duration of the transfer operation and the tolerance time of the transfer operation. Verifying whether the temporal constraint information is reasonable in step S1600 includes steps S1610 and S1620.

**In** step S1610, the temporal constraint information is determined to be reasonable in a case that the expiration time indicated by the expiration time information is greater than or equal to the total duration. In a case that the expiration time is greater than or equal to the preset duration of the transfer operation to transfer the target between the two nodes determined in step S1400, it indicates that the expiration time is configured reasonably. In step S1620, in a case that the expiration time indicated by the expiration time information is less than the total duration, it is determined that the temporal constraint information is wrong. That is, the expiration time should not be less than the predicted total duration of the transfer operation. Otherwise, it indicates that the configuration of temporal constraint information is unreasonable, which may affect the smooth progress of the automated process.

**In** determining that the temporal constraint information is unreasonable, corresponding prompt information may be sent to remind the user to make modifications. For example, a prompt box of "verification failure" may be popped up in a verification interface, and the information of the node with the verification failure may also be prompted. Therefore, it facilitates users to modify the temporal constraint information between the corresponding nodes based on the prompt information.

According to the solution described above, whether the temporal constraint information is reasonable is determined by comparing the expiration time indicated by the expiration time information between two adjacent nodes and the preset total duration of the transfer operation performed between the two nodes. The verification logic of this solution is simple and the amount of calculation is small.

Exemplarily, after verifying whether the temporal constraint information is reasonable in step S1600, the method 1000 further includes steps S1710, S1720, and S1730. After the initial verification of the temporal constraint information between two adjacent nodes as described above, the temporal constraint information may be re-verified. For example, after the user modifies the temporal constraint information in the process, the temporal constraint information may be re-verified by performing steps S1710, S1720, and S1730 in response to the user pre-running the process.

In step S1710, an execution sequence of atomic operations between the two adjacent nodes is determined based on a connection relationship of the two adjacent nodes in the automated process. For example, atomic operations involved in two adjacent nodes may be determined based on node information of two adjacent nodes in the automated process. These atomic operations may be, for example, minimum operating units of various operations performed on the target by various devices involved in the device node, which may include minimum operating units of primary operation performed by the primary execution device, or minimum operating units of the pre-operation and the post-operation performed by the transfer device. The atomic operation may be, for example, a door opening operation of the centrifuge, a door closing operation of the centrifuge, a transfer operation of the robotic arm, a rotation operation of the centrifuge, or the like. Then, the execution sequence of the determined atomic operations may be determined, based on the connection relationship between the two nodes. The execution sequence may include, for example, a serial execution sequence or a parallel execution sequence.

In step S 1720, the total duration of the transfer operation performed between the two adjacent nodes is re-determined, based at least on the execution sequence and preset execution duration of each of the atomic operations. For example, a group of serial sub-operation executed in serial order may be determined based on the determined execution sequence of the atomic operations. The preset execution duration of each atomic operation in the serial sub-operation may be obtained correspondingly. And the total duration of the transfer operation may be re-determined based on the execution durations of atomic operations in the transfer operation on the target involved in the serial sub-operation. For example, in a case that two adjacent nodes are a start node and a device node, a first sum of preset execution durations of respective atomic operations involved in the pre-operation corresponding to the device node may be calculated as the total duration of the transfer operation. In a case that two adjacent nodes are both device nodes, a second sum of preset execution durations of respective atomic operations involved in the post-operation corresponding to the upstream device node and a third sum of preset execution durations of respective atomic operation involved in the pre-operation corresponding to the downstream device node may be calculated, and the second sum of the execution durations and the third sum of the preset execution durations may be added up as the total duration of the transfer operation. And in a case that two adjacent nodes are a device node and an end node, a fourth sum of the preset execution durations of respective atomic operations involved in the post-operation corresponding to the device node may be calculated as the total duration of the transfer operation. In a specific example, the atomic operation of the transfer operation performed on the target involved in the serial sub-operation includes the door opening operation of the centrifuge, the door closing operation of the centrifuge, and the transfer operation of the robotic arm, and thus the sum of the preset execution duration of the door opening operation of the centrifuge, the preset execution duration of the door closing operation of the centrifuge, and the preset execution duration of the transfer operation of the robotic arm may be determined as the total duration.

In step S1730, whether the temporal constraint information is reasonable is re-verified based on the re-determined total duration. This step is similar to step S1600, and various implementations thereof will be readily understood by those skilled in the art, which are not described herein.

According to the solution described above, after the first verification of the correctness of the temporal constraint information between the two nodes, the temporal constraint information may be re-verified before the operation of the automated process. This solution ensures the rationality of temporal constraint information, thus ensuring the effectiveness and availability of the target, and further ensuring the smooth and effective implementation of the automated process.

Exemplarily, the temporal constraint information includes expiration time information, and the method 1000 further includes step S1800 after verifying whether the temporal constraint information is reasonable in step S1600.

In step S1800, after determining that the temporal constraint information is reasonable, the automated process is executed in response to a second operation performed by the user. During the automated process, whether an execution duration for performing the transfer operation on the target between the two adjacent nodes is greater than an expiration time indicated by the expiration time information is determined; and the target is marked with an expired state in a case that the execution duration for performing the transfer operation on the target between the two adjacent nodes is greater than the expiration time indicated by the expiration time information. The second operation may be any suitable operation. By way of example and not limitation, a control of "executing process" may be included in the user interface, and the second operation may be an operation of a user clicking on the control. According to an embodiment of the present disclosure, the automated process may be executed after verifying that the temporal constraint information between two adjacent nodes is correct. Further, in a case that the temporal constraint information includes the expiration time information, the actual execution duration of the transfer operation that transfers the target between the two nodes may be monitored when the process runs to the transfer operation associated with the expiration time information, and the target may be marked as the expired state in a case that the actual execution duration of the target exceeds the expiration time. In this way, it may be reminded to the user that the target has expired, to facilitate the corresponding processing of the expired target.

In the above solution, in the executing of the automated process, expiration monitoring is performed with regard to the actual execution duration of the transfer operation on the target based on the verification passed temporal constraint information, and the target is marked with the expired state in a case that the target is determined to be expired. Therefore, users are reminded to pay special attention to expired targets, so as to ensure the efficacy and usability of targets, and furthermore, to ensure the smooth and effective execution of the automated process.

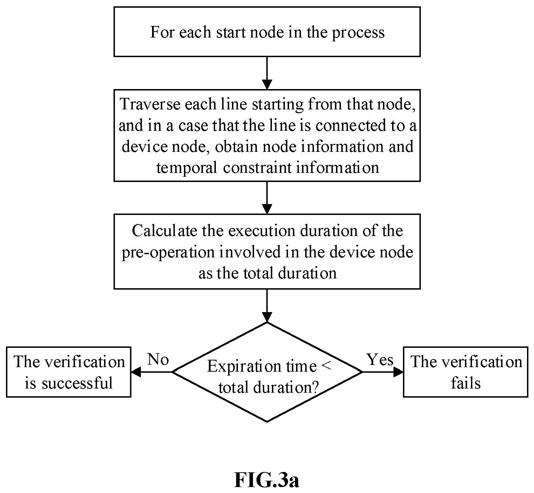

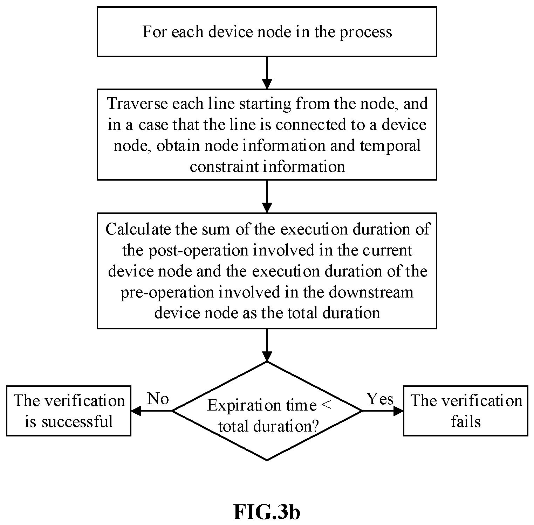

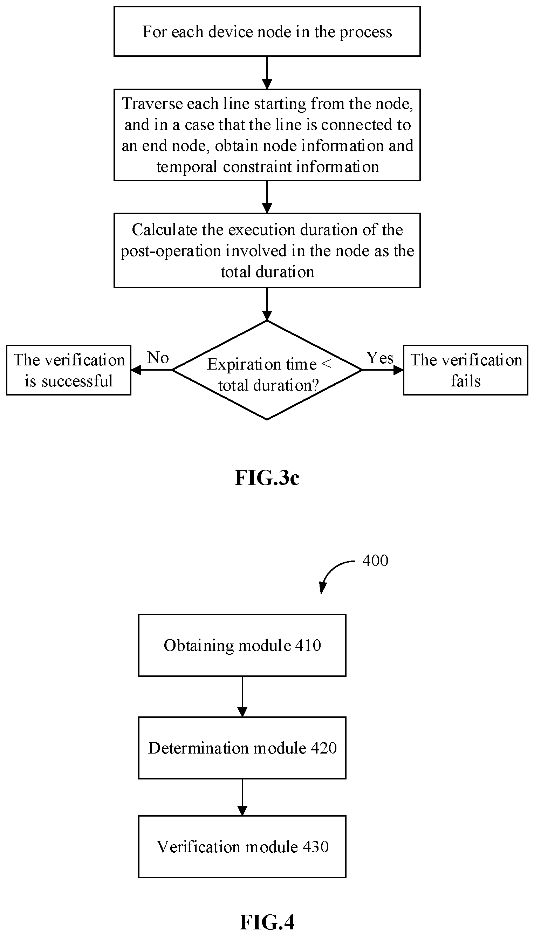

FIGS. 3a to 3c show schematic flowcharts of three different parts of the management method for the automated process according to another embodiment of the present disclosure, respectively. FIG. 3a shows a schematic diagram illustrating a first part of a management method for an automated process according to an embodiment of the present disclosure. As shown in FIG. 3a, for each start node in the automated process, each line starting from that node is traversed. In a case that the other node connected to the line is a device node, node information of the two nodes and temporal constraint information between the two nodes may be obtained. The temporal constraint information includes, for example, expiration time information. And the execution duration of the pre-operation involved in the device node may be calculated as the predicted total duration of the transfer operation performed between the two nodes. And then, whether the temporal constraint information is reasonable is verified by comparing the expiration time indicated by the expiration time information with the total duration. In a case that the expiration time is less than the total duration, it is determined that the verification fails; and in a case that the expiration time is greater than or equal to the total duration, it is determined that the verification is successful. FIG. 3b shows a schematic diagram illustrating a second part of a management method for an automated process according to an embodiment of the present disclosure. As shown in FIG. 3b, for each device node in the automated process, each line starting from the node is traversed. In a case that the other node connected to the line is a device node, node information of the two nodes and temporal constraint information between the two nodes may be obtained. The temporal constraint information includes, for example, expiration time information. And the sum of the execution duration of the post-operation involved in the upstream device node and the execution duration of the pre-operation involved in the downstream device node may be calculated as the predicted total duration of the transfer operation between the two nodes. And then, whether the temporal constraint information is reasonable is verified by comparing the expiration time indicated by the expiration time information with the total duration. FIG. 3c shows a schematic diagram illustrating a third part of a management method for an automated process according to an embodiment of the present disclosure. As shown in FIG. 3c, for each device node in the automated process, each line starting from the node is traversed. In a case that the other node connected to the line is an end node, node information of the two nodes and temporal constraint information between the two nodes may be obtained. The temporal constraint information includes, for example, expiration time information. And the execution duration of the post-operation involved in the upstream device node may be calculated as the predicted total duration of the transfer operation performed between the two nodes. And then, whether the temporal constraint information is reasonable is verified by comparing the expiration time indicated by the expiration time information with the total duration.

According to a second aspect of the present disclosure, a management apparatus for an automated process is provided. FIG. 4 is a schematic block diagram of a management apparatus 400 for an automated process according to an embodiment of the present disclosure. As shown in FIG. 4, the apparatus 400 includes: an obtaining module 410, a determination module 420, and a verification module 430.

The obtaining module 410 is configured to obtain temporal constraint information between two adjacent nodes in the automated process and obtain node information of the two adjacent nodes, where the temporal constraint information is for constraining an execution duration of a transfer operation to transfer a target between the two adjacent nodes.

The determination module 420 is configured to determine a total duration of the transfer operation, based on the node information of the two adjacent nodes.

The verification module 430 is configured to verify whether the temporal constraint information is reasonable based on the total duration.

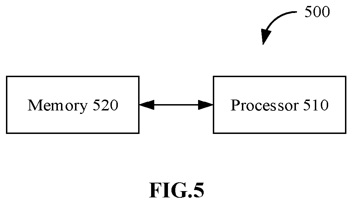

According to a third aspect of the present disclosure, an electronic device is provided. FIG. 5 is a schematic block diagram of an electronic device 500 according to an embodiment of the present disclosure. As shown in FIG. 5, the electronic device 500 includes a processor 510 and a memory 520. Where, the memory stores computer program instructions, and the computer program instructions, when executed by the processor, implement the management method 1000 for the automated process described above.

According to a fourth aspect of the present disclosure, a storage medium is further provided. The storage medium stores program instructions, and the program instructions, when executed, implement the management method for the automated process described above. The storage medium may include, for example, a storage component of a tablet computer, a hard disk of a personal computer, a read-only memory (ROM), an erasable programmable read-only memory (EPROM), a portable read-only memory (CD-ROM), a USB memory, or any combination of the storage media described above. The computer-readable storage medium may be any combination of one or more computer-readable storage media.

Those skilled in the art can understand the specific implementation schemes and beneficial effects of the management apparatus for the automated process, the electronic device and the storage medium described above by reading the related description of the management method for the automated process described above, which are not repeated herein for the sake of brevity.

Although the embodiments have been described herein with reference to the drawings, it should be understood that the above embodiments are merely exemplary and are not intended to limit the scope of the present disclosure. Many changes and modifications may be made by those skilled in the art without departing from the scope and spirit of the present disclosure. All such changes and modifications are deemed to fall into the scope claimed by the claims of the present disclosure.

Those skilled in the art may realize that the units and algorithm steps of each example described in conjunction with the embodiments herein may be implemented by electronic hardware, or a combination of computer software and electronic hardware. Whether these functions are performed in hardware or software depends on the specific application and design constraints of the technical solution. Those skilled in the art may apply different methods to implement the described functions for each specific application, but such implementation should not be regarded as beyond the scope of the present disclosure.

It should be understood that the apparatuses, devices and methods disclosed in the embodiments of the present disclosure may be implemented in other manners. For example, the apparatus/device embodiments described above are only schematic. For example, the division of the units is only based on logical functions, and there may be other division ways in actual implementation, such as multiple units or components may be combined or integrated into another device, or some features may be neglected or not executed.

In the specification provided herein, a lot of specific details are described. However, it may be appreciated that the embodiments of the present disclosure may be implemented without these specific details. In some embodiments, well-known methods, structures and techniques are not shown in detail in order to avoid obscuring understanding of the specification.

Similarly, it should be understood that in order to simplify the present disclosure and facilitate understanding one or more of the various aspects of the disclosure, in the description of the exemplary embodiments of the present disclosure, the various features of the present disclosure are sometimes grouped together into a single embodiment, figure, or description thereof. However, the method according to the present disclosure should not be interpreted as reflecting the following intention: the claimed disclosure requires more features than those explicitly stated in each claim. More specifically, as reflected in the corresponding claims, the inventive point is that the corresponding technical problem can be solved with features fewer than all the features of a single embodiment being disclosed. Therefore, the claims following the detailed description are hereby expressly incorporated into the detailed description, where each claim itself serves as an independent embodiment of the present disclosure.

It can be understood by those skilled in the art that, except for mutually exclusive features, all features disclosed in this specification (including the claims, abstract and drawings) and all processes or units of any method or device disclosed in the specification may be combined in any way. Unless otherwise expressly stated, each feature disclosed in this specification (including the claims, abstract and drawings) may be replaced by an alternative feature that provides the same, equivalent or similar purpose.

In addition, it can be understood by those skilled in the art that, although some embodiments described herein include certain features included in other embodiments instead of other features, the combination of features of different embodiments is meant to be within the scope of the present disclosure and form different embodiments. For example, in the claims, any one of the claimed embodiments may be used in any combination.

The various component embodiments of the present disclosure may be implemented in hardware, or in software modules running on one or more processors, or in a combination thereof. It may be understood by those skilled in the art that a microprocessor or a digital signal processor (DSP) may be adopted in practice to realize some or all of the functions of some of the modules of the management apparatus for the automatic process according to the embodiments of the present disclosure. The present disclosure may alternatively be implemented as a device or program (such as a computer program and computer program product) for performing part or all of the methods described herein. Such a program implementing the present disclosure may be stored on a computer-readable medium, or may be in the form of one or more signals. Such a signal may be downloaded from an Internet website, or provided on a carrier signal, or provided in any other form.

It should be noted that the above embodiments illustrate rather than limit the present disclosure, and alternative embodiments may be designed by those skilled in the art without departing from the scope of the claims. In the claims, any reference symbol between parentheses shall not be construed as a limitation of the claims. The word "comprising" /"including" does not exclude the presence of elements or steps not listed in the claims. The word "one" or "an" preceding an element does not exclude the presence of multiple of such elements. The present disclosure may be implemented by means of hardware including several different elements and by means of a suitably programmed computer. In a unit claim enumerating several devices, several of these devices may be embodied by a same hardware item. The use of the words "first", "second", "third" and the like does not indicate any order. These words may be interpreted as names.

Described above are only specific embodiments of the present disclosure or explanation for the specific embodiments of the present disclosure, and the protection scope of the present disclosure is not limited thereto. Any changes or alternations that can be easily envisaged by those skilled in the art within the technical scope disclosed in the present disclosure shall fall within the protection scope of the present disclosure. The protection scope of the present disclosure shall be in accordance with the protection scope of the claims.

## Claims

1. A management method for an automated process, comprising:
obtaining temporal constraint information between two adjacent nodes in the automated process and node information of the two adjacent nodes, wherein the temporal constraint information is for constraining an execution duration of a transfer operation to transfer a target between the two adjacent nodes;
determining a total duration of the transfer operation, based on the node information of the two adjacent nodes; and
verifying whether the temporal constraint information is reasonable based on the total duration.

2. The management method for the automated process according to claim 1, wherein the node information comprises a note type, the node type comprises a device node, and the node information of the device node further comprises: duration information of operations supported by a device corresponding to the device node; and the determining a total duration of the transfer operation, based on the node information of the two adjacent nodes comprises:
determining the total duration based on the node type and the duration information of the operations supported by the device corresponding to the device node.

3. The management method for the automated process according to claim 2, wherein the node type further comprises a start node; and the determining the total duration based on the node type and the duration information of the operations supported by the device corresponding to the device node comprises:
in a case that an upstream node of the two adjacent nodes is a start node, determining a first execution duration of a pre-operation corresponding to a downstream node of the two adjacent nodes, wherein the pre-operation is an operation completed before a device corresponding to the downstream node performs its own operation; and
determining the first execution duration as the total duration.

4. The management method for the automated process according to claim 2, wherein the determining the total duration based on the node type and the duration information of the operations supported by the device corresponding to the device node comprises:
in a case that the two adjacent nodes are both device nodes, determining a second execution duration of a post-operation corresponding to an upstream node of the two adjacent nodes, and determining a third execution duration of a pre-operation corresponding to a downstream node of the two adjacent nodes, wherein the post-operation is an operation completed after the device corresponding to the upstream node performs its own operation, and the pre-operation is an operation completed before the device corresponding to the downstream node performs its own operation; and
adding up the second execution duration and the third execution duration to obtain the total duration.

5. The management method for the automated process according to claim 2, wherein the node type further comprises an end node; and the determining the total duration based on the node type and the duration information of the operations supported by the device corresponding to the device node comprises:
in a case that a downstream node of the two adjacent nodes is an end node, determining a fourth execution duration of a post-operation corresponding to an upstream node of the two adjacent nodes, wherein the post-operation is an operation completed after a device corresponding to the upstream node performs its own operation; and
determining the fourth execution duration as the total duration.

6. The management method for the automated process according to any one of claims 3 to 5, wherein the obtaining temporal constraint information between two adjacent nodes in the automated process and node information of the two adjacent nodes comprises:
obtaining node information of each start node or each device node in the automated process, traversing each downstream node directly connected to each start node or each device node, and obtaining node information of the downstream node for cases where the downstream node is a device node or an end node.

7. The management method for the automated process according to any one of claims 1 to 5, wherein the device node in the two adjacent nodes corresponds to a plurality of targets, and the temporal constraint information is configured to separately constrain an execution duration of a transfer operation to transfer each of the plurality of targets between the two adjacent nodes, wherein
the determining a total duration of the transfer operation comprises: determining a total duration of the transfer operation for each of the plurality of targets; and
the verifying whether the temporal constraint information is reasonable comprises: separately verifying whether the temporal constraint information for each target is reasonable based on the total duration of the transfer operation for respective target.

8. The management method for the automated process according to any one of claims 1 to 5, wherein the temporal constraint information comprises expiration time information, and the verifying whether the temporal constraint information is reasonable comprises:
determining that the temporal constraint information is reasonable in a case that an expiration time indicated by the expiration time information is greater than or equal to the total duration; and
determining that the temporal constraint information is erroneous in a case that the expiration time indicated by the expiration time information is less than the total duration.

9. The management method for the automated process according to any one of claims 1 to 5, wherein before the obtaining temporal constraint information between two adjacent nodes in the automated process, the method further comprises:
displaying a graphical user interface, wherein the graphical user interface comprises an operable control; and
receiving the temporal constraint information from a user in response to a first operation performed by the user with the operable control.

10. The management method for the automated process according to any one of claims 1 to 5, wherein the temporal constraint information comprises expiration time information, and after verifying whether the temporal constraint information is reasonable, the method further comprises:
after determining that the temporal constraint information is reasonable, running the automated process in response to a second operation performed by the user;
in the running of the automated process, determining whether an execution duration of the transfer operation to transfer the target between the two adjacent nodes is greater than an expiration time indicated by the expiration time information; and
marking the target with an expired state, in a case that the execution duration of the transfer operation to transfer the target between the two adjacent nodes is greater than the expiration time indicated by the expiration time information.

11. The management method for the automated process according to any one of claims 1 to 5, wherein after verifying whether the temporal constraint information is reasonable, the method further comprises:
determining an execution sequence of atomic operations between the two adjacent nodes based on a connection relationship of the two adjacent nodes in the automated process;
re-determining the total duration, based at least on the execution sequence and a preset execution duration of each of the atomic operations; and
re-verifying whether the temporal constraint information is reasonable based on the re-determined total duration.

12. A management apparatus for an automated process, comprising:
an obtaining module, configured to obtain temporal constraint information between two adjacent nodes in the automated process and obtain node information of the two adjacent nodes, wherein the temporal constraint information is for constraining an execution duration of a transfer operation to transfer a target between the two adjacent nodes;
a determination module, configured to determine a total duration of the transfer operation, based on the node information of the two adjacent nodes; and
a verification module, configured to verify whether the temporal constraint information is reasonable based on the total duration.

13. An electronic device, comprising a processor and a memory, wherein the memory stores computer program instructions, and the computer program instructions, when executed by the processor, implement the management method for the automated process according to any one of claims 1 to 11.

14. A storage medium, wherein the storage medium stores program instructions, and the program instructions, when executed, implement the management method for the automated process according to any one of claims 1 to 11.
